# EUROPEAN PATENT APPLICATION

(11) **EP 4 734 297 A1**
(43) Date of publication of application: **29.04.2026**
(21) Application number: 25306744.1
(22) Date of filing: 20.10.2025
(51) Int. Cl.: H01R 13/703, H01R 13/66, H01R 13/707, H01R 24/76, H01H 1/00, H02H 9/00

(54) **DC SOCKET AND POWER SUPPLY DEVICE**

(30) Priority: 22.10.2024 CN 202411482102
(71) Applicant: SCHNEIDER ELECTRIC INDUSTRIES SAS, 92500 Rueil-Malmaison (FR)
(72) Inventor: XIONG, Kun, Shenzhen, 518000 (CN); ZHANG, Youliang, Shenzen, 518000 (CN)
(74) Representative: Manitz Finsterwald Patent- und Rechtsanwaltspartnerschaft mbB

(57) **Abstract**

The present disclosure defines a DC socket comprising a positive socket contact (11) and a negative socket contact (12); a linkage detection unit (20) disposed adjacent to the positive socket contact (11) or the negative socket contact (12), and configured to generate a trigger signal in response to a pin (201) of a plug (200) being pulled out from the positive socket contact (11) or the negative socket contact (12) and passing a first position; a mechanical contact switch (30) electrically connected between the positive socket contact (11) and a positive power input terminal (101) of the DC socket, and configured to be closed in response to the pin (201) being inserted into the positive socket contact (11) or the negative socket contact (12) to a second position and be opened in response to the pin (201) being pulled out from the positive socket contact (11) or the negative socket contact (12) and passing the second position, wherein a pulled-out portion of the pin (201) in the second position is longer than that of the pin (201) in the first position; a control circuit (40) electrically connected to the linkage detection unit (20), and configured to generate a control signal lasting for a predetermined duration in response to receiving the trigger signal; and a delayed switching-off unit (50) electrically connected between the positive socket contact (11) and the positive power input terminal (101) and electrically connected to the control circuit (40), and configured to be switched on in response to receiving the control signal from the control circuit (40) and be switched off before the pin (201) is pulled out from the positive socket contact (11) or the negative socket contact (12).

## Description

### FIELD

Embodiments of the present disclosure generally relate to the field of electrical equipment, and in particular, to a DC socket and a power supply device.

### BACKGROUND

When a plug is inserted into or pulled out from a socket, if the circuit is in a power-on state, an arc phenomenon may occur, thereby causing damage to the device. Due to the characteristic of the alternating current, that is, the current passes through zero-crossing point twice per cycle, AC (alternating current) arcs can be naturally extinguished at these zero-crossing points, thereby reducing potential safety risks. However, the voltage in the DC (direct current) power supply system does not have such zero-crossing point, and a DC arc generated during the process of a DC socket being plugged or unplugged lacks conditions for naturally extinguishing. Therefore, the DC arc is more difficult to be extinguished than the AC arc, which increases the risk in the operation process, and may cause damage to the electrical device.

### SUMMARY

An object of embodiments of the present disclosure is to provide a DC socket and a power supply device to at least partially solve the above problems and other potential problems.

In a first aspect of the present disclosure, a DC socket is provided. The DC socket includes a positive socket contact and a negative socket contact, a linkage detection unit, a mechanical contact switch, a control circuit, and a delayed switching-off unit. The linkage detection unit is disposed adjacent to the positive socket contact or the negative socket contact, and configured to generate a trigger signal in response to a pin of a plug being pulled out from the positive socket contact or the negative socket contact and passing a first position. The mechanical contact switch is electrically connected between the positive socket contact and a positive power input terminal of the DC socket, and configured to be closed in response to the pin being inserted into the positive socket contact or the negative socket contact to a second position and be opened in response to the pin being pulled out from the positive socket contact or the negative socket contact and passing the second position, where a pulled-out portion of the pin in the second position is longer than that of the pin in the first position. The control circuit is electrically connected to the linkage detection unit, and configured to generate a control signal lasting for a predetermined duration in response to receiving the trigger signal. The delayed switching-off unit is electrically connected between the positive socket contact and the positive power input terminal and electrically connected to the control circuit, and configured to be switched on in response to receiving the control signal from the control circuit and be switched off before the pin is pulled out from the positive socket contact or the negative socket contact.

In some embodiments, a DC power supply unit electrically connected to the positive power input terminal terminal and a negative power input terminal of the DC socket, and electrically connected to the control circuit.

In some embodiments, the DC power supply unit includes a positive terminal and a negative terminal, and the linkage detection unit includes: a first resistor electrically connected to the positive terminal and the negative terminal of the DC power supply unit; a linkage detection switch electrically connected between the first resistor and the negative terminal, and configured to be switched off in response to the pin being pulled out from the positive socket contact or the negative socket contact and passing the first position; and a second resistor, an end of the second resistor being electrically connected to a node between the first resistor and the linkage detection switch, the other end of the second resistor being electrically connected to the control circuit, and when the linkage detection switch is switched off, a high level voltage indicating the trigger signal is sent to the control circuit via the second resistor.

In some embodiments, the linkage detection unit includes a proximity switch.

In some embodiments, a surge current limiting unit electrically connected between the delayed switching-off unit and the positive power input terminal of the DC socket to limit instantaneous current surges.

In some embodiments, the surge current limiting unit includes a negative temperature coefficient thermistor.

In some embodiments, the delayed switching-off unit includes a semiconductor switch configured to be switched on under control of the control signal.

In some embodiments, the first position is a position where the pin is pulled out by one-third of its stroke.

In some embodiments, the DC socket further includes: a housing enclosing the positive socket contact, the negative socket contact, the delayed switching-off unit, the mechanical contact switch, the linkage detection unit, and the control circuit, and including two jacks, where the two jacks correspond to the positive socket contact and the negative socket contact respectively for insertion of pins of the plug.

In a second aspect of the present disclosure, a power supply device is provided. The power supply device includes the DC socket according to the first aspect of the present disclosure.

In embodiments of the present disclosure, the DC socket includes the positive socket contact, the negative socket contact, the linkage detection unit, the mechanical contact switch, the control circuit, and the delayed switching-off unit. The linkage detection unit is disposed adjacent to the positive socket contact or the negative socket contact. The mechanical contact switch is electrically connected between the positive socket contact and the positive power input terminal of the DC socket. The control circuit is electrically connected to the linkage detection unit, and configured to generate the control signal lasting for the predetermined duration in response to receiving the trigger signal. The delayed switching-off unit is electrically connected between the positive socket contact and the positive power input terminal and electrically connected to the control circuit. With this arrangement, the linkage detection unit generates the trigger signal when the pin of the plug is pulled out from the positive socket contact or the negative socket contact and passes the first position. The delayed switching-off unit is switched on upon receiving the control signal from the control circuit, that is, it is switched on before the mechanical contact switch is opened. Continuing to unplug the plug, the mechanical contact switch is opened when the pin is pulled out from the positive socket contact or the negative socket contact and passes the second position. The pulled-out portion of the pin in the second position is longer than that of the pin in the first position. Since the delayed switching-off unit is switched on, no arc phenomenon occurs when the mechanical contact switch is opened. Continuing to unplug the plug, the delayed switching-off unit is also switched off. When the pin is pulled out from the positive socket contact or the negative socket contact, the positive socket contact and the negative socket contact are de-energized, so no arc phenomenon occurs between the pin and the positive socket contact or the negative socket contact. Therefore, the safety of the DC socket during the plug being unplugged can be increased, so that damage to the electrical device is avoided.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 shows a circuit block diagram of a DC socket according to an embodiment of the present disclosure;
FIG. 2 shows a variation trend of a voltage signal of a linkage detection unit over time according to an embodiment of the present disclosure;
FIG. 3 shows a variation trend of a control signal received by a delayed switching-off unit over time according to an embodiment of the present disclosure;
FIG. 4 shows a circuit diagram of a control circuit according to an embodiment of the present disclosure;
FIG. 5 shows a circuit block diagram of a DC socket according to an embodiment of the present disclosure, where the linkage detection unit includes a linkage detection switch;
FIG. 6 shows a circuit block diagram of a DC socket according to an embodiment of the present disclosure, where a linkage detection unit includes a proximity switch; and
FIG. 7 shows a circuit diagram of a delayed switching-off unit according to an embodiment of the present disclosure.

### reference numerals description:

101 positive power input terminal; 102 negative power input terminal;
11 positive socket contact; 12: negative socket contact;
20 linkage detection unit; 21, first resistor; 22, second resistor; 23, linkage detection switch; 24, proximity switch;
30 mechanical contact switch;
40 control circuit;
50 delayed switching-off unit;
60 DC power supply unit; VCC, positive terminal; GND, negative terminal;
70 surge current limiting unit;
200 plug; 201 pin.

### DETAILED DESCRIPTION

Embodiments of the present disclosure will be described in more detail below with reference to the accompanying drawings. While embodiments of the present disclosure are shown in the drawings, it should be understood that the present disclosure may be implemented in various forms and should not be limited by embodiments set forth herein. Rather, these embodiments are provided to make this disclosure more thorough and complete, and to fully convey the scope of the present disclosure to those skilled in the art.

As used herein, the term "including" and variations thereof represent openness, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first", "second", and the like may refer to different or identical objects.

As described above, the voltage in the DC power supply system does not have zero-crossing point, and the DC arc generated during the process of the DC socket being plugged or unplugged lacks conditions for naturally extinguishing. Therefore, the DC arc is more difficult to be extinguished than the AC arc, which increases the risk in the operation process, and may cause damage to the electrical device.

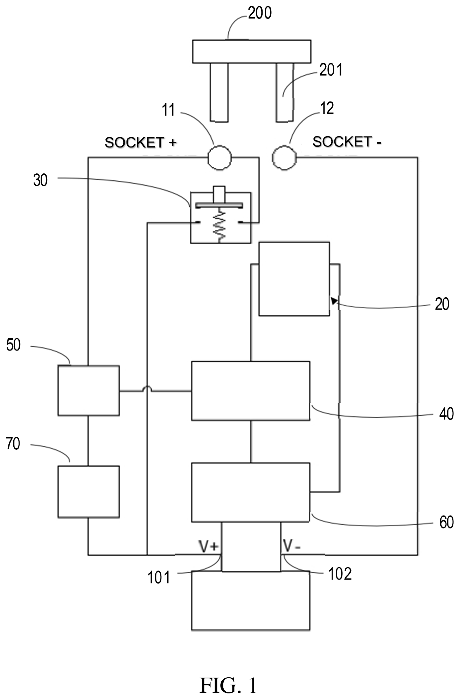

In embodiments of the present disclosure, a DC socket and a power supply device are provided. The DC socket includes a positive socket contact, a negative socket contact, a linkage detection unit, a mechanical contact switch, a control circuit, and a delayed switching-off unit. The linkage detection unit generates a trigger signal when a pin of a plug is pulled out from the positive socket contact or the negative socket contact and passes a first position. The delayed switching-off unit is switched on upon receiving a control signal from the control circuit, that is, it is switched on before the mechanical contact switch is opened. Continuing to unplug the plug, the mechanical contact switch is opened when the pin is pulled out from the positive socket contact or the negative socket contact and passes a second position. A pulled-out portion of the pin in the second position is longer than that of the pin in the first position. Since the delayed switching-off unit is switched on, no arc phenomenon occurs when the mechanical contact switch is opened. Continuing to unplug the plug, the delayed switching-off unit is also switched off. When the pin is pulled out from the positive socket contact or the negative socket contact, the positive socket contact and the negative socket contact are de-energized, so no arc phenomenon occurs between the pin and the positive socket contact or the negative socket contact. Therefore, the safety of the DC socket during the plug being unplugged can be increased, so that damage to the electrical device is avoided. The principles of the present disclosure will be described in detail below with reference to FIGS. 1 to 7.

As shown in FIG. 1, the DC socket includes a positive socket contact 11, a negative socket contact 12, a linkage detection unit 20, a mechanical contact switch 30, a control circuit 40, and a delayed switching-off unit 50.

As shown in FIG. 1, the positive socket contact 11 and the negative socket contact 12 are metal elements in the DC socket that are used to be connected with a plug 200, and they are respectively used to be connected with a positive pin 201 and a negative pin 201 of the plug 200, so as to supply power to a connected device. The positive socket contact 11 is matched with the positive pin 201 of the plug 200, and the negative socket contact 12 corresponds to the negative pin 201.

In some embodiments, in order to ensure that the pin 201 is in good contact with a corresponding socket contact, a spring, an elastic sheet, or another form of pressure device may be disposed inside the socket contact. When the pin 201 is inserted into the socket contact, the socket contact may tightly clamp the pin 201, thereby reducing contact resistance to improve electrical conductivity. In addition, the socket contact is generally made of a metal with good electrical conductivity and corrosion resistance, such as a copper alloy or a silver-plated material, to ensure reliability and safety during long-term use.

In some embodiments, the pin 201 of the plug 200 and the socket contact of the DC socket may mate with each other in a circular structure, which is suitable for, for example, some household appliances. In other embodiments, the pin 201 of the plug 200 and the socket contact of the DC socket may mate with each other in a rectangular structure, which is applied in, for example, industrial device and some professional fields. It should be understood that the mating forms of the pin 201 of the plug 200 and the socket contact are various, which depend on different standards and application scenarios, the present disclosure is not intended to impose limitations on this.

As shown in FIG. 1, the linkage detection unit 20 is a component in the DC socket for monitoring a position of the pin 201. In the DC socket, the linkage detection unit 20 is disposed adjacent to the positive socket contact 11 or the negative socket contact 12, and may monitor in real time whether the pin 201 of the plug 200 is pulled out from the socket contact. Specifically, when the pin 201 of the plug 200 is pulled out from the positive socket contact 11 or the negative socket contact 12 and passes a predetermined first position, the linkage detection unit 20 can rapidly generate a trigger signal. The trigger signal enables a circuit inside the DC socket to respond accordingly, thereby improving the safety of the operation.

As shown in FIG. 1, the mechanical contact switch 30 is electrically connected between the positive socket contact 11 and a positive power input terminal 101 of the DC socket. The mechanical contact switch 30 may control the on-off of the control circuit 40 when the pin 201 of the plug 200 is inserted into or pulled out from a predetermined position within the socket contact. Specifically, when the pin 201 is inserted into the positive socket contact 11 or the negative socket contact 12 to a second position, the pin 201 has reached a sufficient depth inside the socket contact, and the pin 201 is in sufficient contact with the socket contact. At this point, the mechanical contact switch 30 may be closed to ensure normal conduction of the circuit. The contact between the pin 201 and the socket contact is reduced when the pin 201 is pulled out from the positive socket contact 11 or the negative socket contact 12 and passes the second position. At this point, the mechanical contact switch 30 is opened, thereby disconnecting the circuit between the positive socket contact 11 and the positive power input terminal 101 of the DC socket.

In embodiments of the present disclosure, a pulled-out portion of the pin 201 in the second position is longer than that of the pin 201 in the first position. That is, during the process of pulling the plug 200 out from the DC socket, the moment when the trigger signal is generated is earlier than the moment when the mechanical contact switch 30 is opened.

In some embodiments, the mechanical contact switch 30 may include a static contact, a movable contact, and an elastic member. The static contact is secured inside the socket, while the movable contact is in direct contact with the pin 201 or indirectly contact with the pin 201 in some manner. When the pin 201 of the plug 200 is inserted into the socket contact and reaches the second position, the movable contact is in contact with the static contact under the pushing of the pin 201, so that the circuit is connected. At this point, current may flow from the positive power input terminal 101 to the positive socket contact 11, and then transmitted to the connected device through the pin 201 of the plug 200. Similarly, when the pin 201 is pulled out from the socket contact and passes the second position, the movable contact is reset under the action of the elastic member (such as a spring) and is separated from the static contact, and the circuit is disconnected accordingly. The elastic member may keep the movable contact in a state separated from the static contact when no external force is applied by the pin 201, thereby preventing the risk of current leakage or short circuit.

As shown in FIG. 1 to FIG. 4, the control circuit 40 is electrically connected to the linkage detection unit 20 and receives the trigger signal from the linkage detection unit 20, and accordingly generates a control signal lasting for a predetermined duration. When the pin 201 of the plug 200 is pulled out from the positive socket contact 11 or the negative socket contact 12 and passes the first position, the linkage detection unit 20 generates the trigger signal. The trigger signal is transmitted to the control circuit 40, and after receiving the trigger signal, the control circuit 40 will generate the control signal lasting for the predetermined duration.

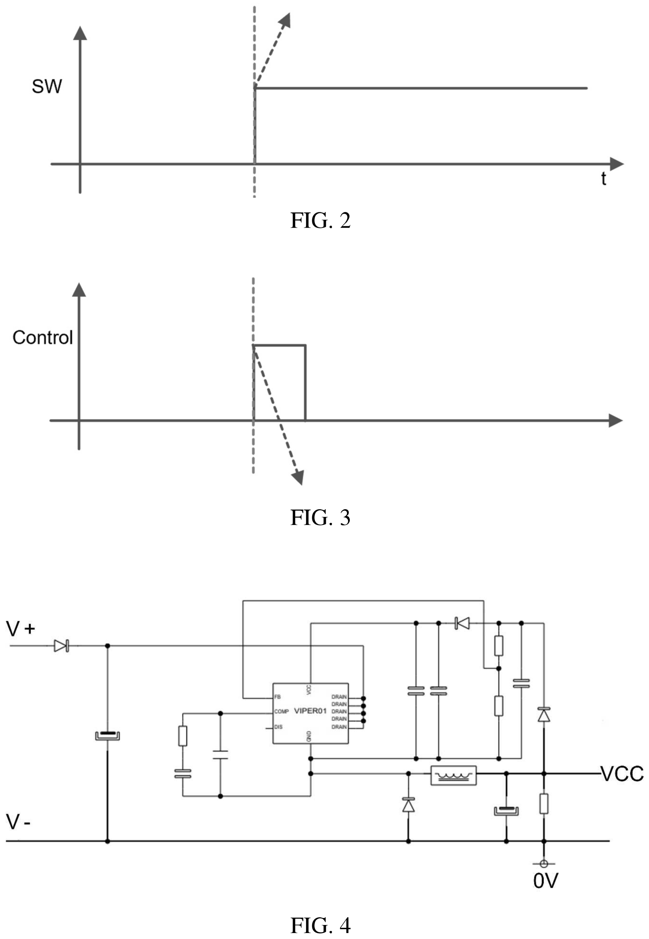

As shown in FIGS. 1 and 3, the delayed switching-off unit 50 is electrically connected between the positive socket contact 11 and the positive power input terminal 101, and electrically connected to the control circuit 40. The delayed switching-off unit 50 is switched on immediately upon receiving the control signal sent by the control circuit 40. At this point, the circuit between the positive socket contact 11 and the positive power input terminal 101 is disconnected after being connected for a predetermined duration, therefore, the predetermined duration may also be referred to as a delay duration (Tdelay). The delayed switching-off unit 50 is switched off before the pin 201 is pulled out from the positive socket contact 11 or the negative socket contact 12. In embodiments of the present disclosure, the duration required for the plug 200 to be pulled out from the DC socket may be statistically verified through a large number of tests, therefore, the predetermined duration of the control signal may be adjusted, thereby ensuring that the delayed switching-off unit 50 is switched off before the pin 201 is pulled out from the positive socket contact 11 or the negative socket contact 12.

With this arrangement, the linkage detection unit 20 generates the trigger signal when the pin 201 of the plug 200 is pulled out from the positive socket contact 11 or the negative socket contact12 and passes the first position. The control circuit 40 sends the control signal after receiving the trigger signal. The delayed switching-off unit 50 is switched on upon receiving the control signal from the control circuit 40, that is, it is switched on before the mechanical contact switch 30 is opened. Continuing to unplug the plug 200, the mechanical contact switch 30 is opened when the pin201 is pulled out from the positive socket contact 11 or the negative socket contact 12 and passes the second position. The pulled-out portion of the pin 201 in the second position is longer than that of the pin 201 in the first position. Thus, no arc is generated when the mechanical contact switch 30 is opened. Continuing to unplug the plug 200, the delayed switching-off unit 50 is also switched off. When the pin 201 is pulled out from the positive socket contact 11 or the negative socket contact 12, the positive socket contact 11 and the negative socket contact 12 are de-energized, so no arc will be generated between the pin 201 and the positive socket contact 11 or the negative socket contact 12. Therefore, the safety of the DC socket during the plug 200 being unplugged can be increased, thereby avoiding damage to the electrical device.

In some embodiments, as shown in FIG. 1 and FIG. 4, the DC socket further includes a DC power supply unit 60. The DC power supply unit 60 is electrically connected to the positive power input terminal 101 and a negative power input terminal 102 of the DC socket, and may provide a stable DC power supply for the socket system. For example, a positive terminal VCC and a negative terminal GND of the DC power supply unit 60 are electrically connected to the control circuit 40, and may supply power to the control circuit 40 to ensure its normal operation.

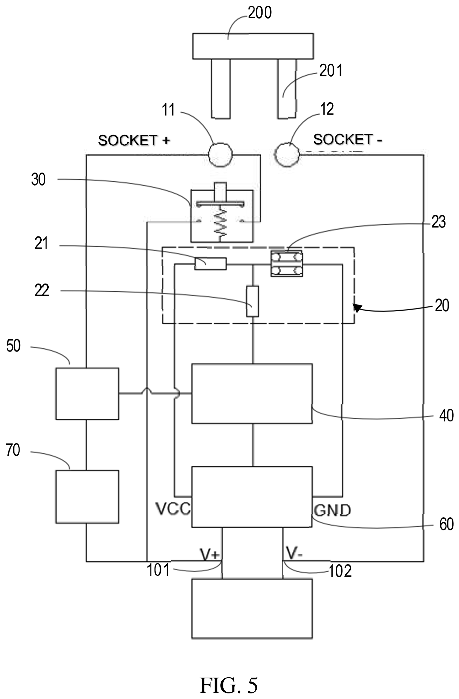

In some embodiments, as shown in FIG. 5, the linkage detection unit 20 includes a first resistor 21, a second resistor 22, and a linkage detection switch 23.

The first resistor 21 is electrically connected between the positive terminal VCC and the negative terminal GND of the DC power supply unit 60. The first resistor 21 may limit the magnitude of the current and prevent excessive current from passing through the linkage detection unit 20, thereby protecting electrical components from being damaged. The linkage detection switch 23 is electrically connected between the first resistor 21 and the negative terminal GND of the DC power supply unit 60. When the pin 201 is pulled out from the positive socket contact 11 or the negative socket contact 12 and passes the first position, the linkage detection switch 23 is switched off, thereby cutting off the circuit between the first resistor 21 and the negative terminal GND of the DC power supply unit 60. An end of the second resistor 22 is electrically connected to a node between the first resistor 21 and the linkage detection switch 23, and the other end of the second resistor 22 is electrically connected to the control circuit 40.

With this arrangement, when the linkage detection switch 23 is in a switch-on state, the voltage across the second resistor 22 is relatively low, and current can flow through the linkage detection switch 23 to the negative terminal GND of the DC power supply unit 60. When the pin 201 is pulled out from the socket contact and the linkage detection switch 23 is switched off, a voltage divider circuit is formed between the first resistor 21 and the second resistor 22. Since the linkage detection switch 23 is switched off, current cannot flow through it to the negative terminal GND, causing the voltage across the second resistor 22 to be raised. This high level voltage signal is sent to the control circuit 40 via the second resistor 22 and serves as an indication of the trigger signal.

As shown in FIG. 2, the linkage detection switch 23 of the linkage detection unit 20 can be released first by the pin 201 of the socket 200 when the pin 201 is pulled out from the socket contact and passes the first position. At this point, the linkage detection switch 23 may be, for example, a tact switch. A signal at the second resistor 22 changes from a low level voltage to a high level voltage, and generates a rising edge signal, which serves as the trigger signal. After receiving the trigger signal, the control circuit 40 will generate the control signal lasting for the predetermined duration and control the operation of the delayed switching-off unit 50.

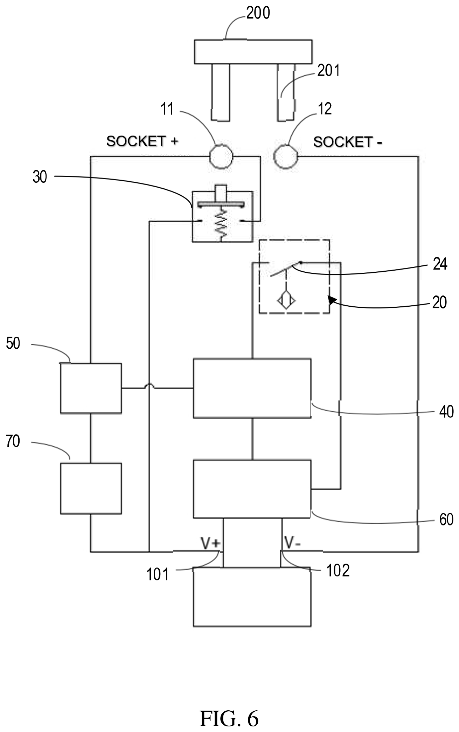

In some embodiments, as shown in FIG. 6, the linkage detection unit 20 may detect the position of the pin 201 by using a proximity switch 24. The proximity switch 24 is a non-contact sensor capable of sensing a change in relative position between the pin 201 and the socket contact. When the pin 201 of the plug 200 is inserted into or pulled out from the socket, the proximity switch 24 will generate a corresponding signal according to the change of the position of the pin 201. With this arrangement, when the pin 201 is pulled out from the positive socket contact 11 or the negative socket contact12 and passes the first position, the proximity switch 24 will detect this change and immediately generate the trigger signal. The trigger signal is then transmitted to the control circuit 40. After receiving the signal, the control circuit 40 will generate the control signal lasting for the predetermined duration, so as to control the operation of the delayed switching-off unit 50, to ensure that the circuit is safely disconnected before the pin 201 is completely pulled out, thereby avoiding an arc phenomenon.

In some embodiments, as shown in FIG. 1, the DC socket further includes a surge current limiting unit 70. The surge current limiting unit 70 is electrically connected between the delayed switching-off unit 50 and the positive power input terminal 101 of the DC socket, and can limit instantaneous current surges. When the plug 200 is first inserted into the socket or the circuit is reconnected, the surge current limiting unit 70 provides a high impedance path at the moment when the circuit is connected through a resistor, an inductor, or a dedicated surge suppression component, thereby reducing the current rising speed and limiting the magnitude of the peak current. As the circuit gradually stabilizes, the impedance of these components will decrease, thereby allowing normal current to pass through. In this way, the surge current limiting unit 70 can effectively protect the connected device and the socket from impact of transient current, thereby improving the overall reliability and safety of the system.

In some embodiments, the surge current limiting unit 70 includes a negative temperature coefficient thermistor. The negative temperature coefficient thermistor has a relatively high resistance value at low temperature. and when the current passes through the negative temperature coefficient thermistor, negative temperature coefficient thermistor is rapidly heated, and its resistance value decreases accordingly. This characteristic enables the negative temperature coefficient thermistor to provide the high impedance path at the moment when the circuit is connected, which effectively limits the initial surge current. As the current continues to pass through the negative temperature coefficient thermistor, the temperature of the negative temperature coefficient thermistor increases, its resistance value decreases, and the normal operating current is allowed to pass through.

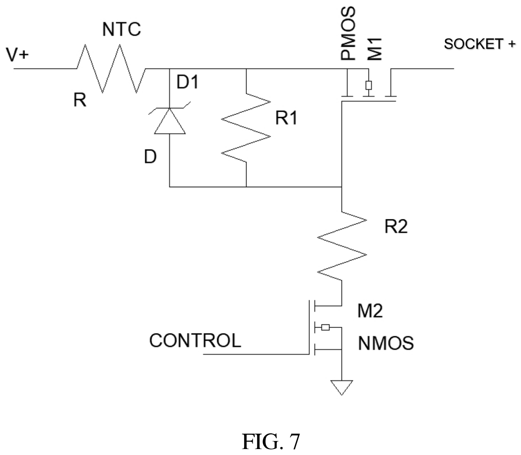

In some embodiments, as shown in FIG. 7, the delayed switching-off unit 50 may include a semiconductor switch. The semiconductor switch is configured to be switched on and off under control of the control signal. For example, the semiconductor switch can use transistor types such as N-channel metal-oxide-semiconductor field-effect transistors or P-channel metal-oxide-semiconductor field-effect transistors. When the control signal generated by the control circuit 40 reaches the delayed switching-off unit 50, the semiconductor switch performs a corresponding operation according to a state of the signal. When the control circuit 40 generates a control signal with a high level voltage, the N-channel metal-oxide-semiconductor field-effect transistor is switched on, allowing current to pass through. When the control signal changes to a low level voltage signal, the N-channel metal-oxide-semiconductor field-effect transistor is switched off, and the current path is cut off. Similarly, the P-channel metal-oxide-semiconductor field-effect transistor is switched on at a low level voltage signal and is switched off at a high level voltage signal. In this way, the semiconductor switch can respond to the control signal quickly, ensuring that the circuit can be safely disconnected within a predetermined time during the unplugging process of the plug 200, thereby avoiding an arc phenomenon.

In some embodiments, the first position is set at a position where the pin 201 is pulled out by one-third of its stroke. When the pin 201 is pulled out to one-third of the stroke from the positive socket contact 11 or the negative socket contact 12, it is partially disengaged from the socket contact but not yet completely pulled out. At this position, the risk of the pin 201 being further pulling out is increased, so timely measures need to be taken to prevent generation of the arc. The linkage detection unit 20 generates the trigger signal when the pin 201 passes this position, and the control circuit 40 initiates arc extinguishing process to ensure that the circuit can be safely disconnected before the pin 201 is completely pulled out. In addition, setting the first position at one-third of the stroke also reserves additional space for the DC socket. For example, when the plug 200 is slightly loose, the pin 201 may move out only a small distance without reaching the one-third stroke position. In this case, the linkage detection unit 20 will not generate the trigger signal immediately due to an erroneous response, thereby avoiding unnecessary arc extinguishing processes.

It should be understood that setting the first position at the position where the pin 201 is pulled out by one-third of its stroke is merely illustrative, and in other embodiments, the first position may be set at other reasonable positions, which is not intended to be limited in the present disclosure.

In some embodiments, the DC socket further includes a housing. The housing encloses the outer sides of electronic components such as the positive socket contact 11, the negative socket contact12, the delayed switching-off unit 50, the mechanical contact switch 30, the linkage detection unit 20, and the control circuit 40. The housing can protect the internal components from the impact of external environment, such as dust, moisture, and other physical damage, and can prevent users from electric shock accidents during use. The housing is provided with two jacks, and the two jacks correspond to the positive socket contact 11 and the negative socket contact 12 respectively for insertion of pins 201 of the plug 200. The size and shape of the jacks need to match those of the pins 201, to ensure that the pins 201 can be smoothly inserted into the socket contacts and firmly secured in the socket contacts, thereby ensuring good electrical contact and stable current transmission.

In a second aspect of the present disclosure, a power supply device is provided. The power supply device includes any one of the aforementioned DC sockets.

In the DC socket of the power supply device, the linkage detection unit 20 is disposed adjacent to the positive socket contact 11 or the negative socket contact12. The mechanical contact switch 30 is electrically connected between the positive socket contact 11 and the positive power input terminal 101 of the DC socket. The control circuit 40 is electrically connected to the linkage detection unit 20, and the control circuit 40 is configured to generate the control signal lasting for the predetermined duration in response to receiving the trigger signal. The delayed switching-off unit 50 is electrically connected between the positive socket contact 11 and the positive power input terminal 101, and electrically connected to the control circuit 40. With this arrangement, the linkage detection unit 20 generates the trigger signal when the pin 201 of the plug 200 is pulled out from the positive socket contact 11 or the negative socket contact12 and passes the first position. The delayed switching-off unit 50 is switched on upon receiving the control signal from the control circuit 40, that is, it is switched on before the mechanical contact switch 30 is opened. Continuing to unplug the plug 200, the mechanical contact switch 30 is opened when the pin 201 is pulled out from the positive socket contact 11 or the negative socket contact 12 and passes the second position. The pulled-out portion of the pin 201 in the second position is longer than that of the pin 201 in the first position. Thus, no arc will be generated when the mechanical contact switch 30 is opened. Continuing to unplug the plug 200, the delayed switching-off unit 50 is also switched off. When the pin 201 is pulled out from the positive socket contact 11 or the negative socket contact 12, the positive socket contact 11 and the negative socket contact 12 are de-energized, so no arc will be generated between the pin 201 and the positive socket contact 11 or the negative socket contact 12. Therefore, the safety of the DC socket during the plug 200 being unplugged can be increased, thereby avoiding damage to the electrical device.

In some embodiments, the power supply device may be an electrical control cabinet. One or more DC sockets may be disposed in the electrical control cabinet, so as to supply power to corresponding electrical loads.

In some embodiments, the power supply device may be a charging device. For example, it may be a charging pile for electric bicycles or electric vehicles. Here, the socket of the DC charging pile directly outputs direct current, which can directly charge the batteries of electric vehicles without the need for conversion via the on-board chargers installed in the vehicles. With this arrangement, the DC charging pile can charge electric vehicles at higher power, thereby shortening the charging time.

In other embodiments, the power supply device may be a power storage device. For example, a solar power station, a household energy storage system, an automotive emergency power supply, a mobile power supply, and the like. When the user inserts the DC plug of the electric load into the DC socket of the power storage device, a power management system starts to monitor the battery status and ensures the power supply safety. A charging and discharging control circuit adjusts the output voltage and the current according to requirements of the electric load, and outputs stable direct current through the DC socket. When the electric load no longer needs electric energy, the user can unplug the plug to terminate the power supply process.

Various embodiments of the present disclosure have been described above, which are illustrative, not exhaustive, and are not limited to embodiments disclosed. Many modifications and variations will be apparent to those of ordinary skill in the art without departing from the scope and spirit of the illustrated embodiments. The selection of the terms used herein is intended to best explain the principles of the embodiments, practical applications, or technical improvements in the marketplace, or to enable others of ordinary skill in the art to understand the embodiments disclosed herein.

## Claims

1. A DC socket comprising:
a positive socket contact (11) and a negative socket contact (12);
a linkage detection unit (20) disposed adjacent to the positive socket contact (11) or the negative socket contact (12), and configured to generate a trigger signal in response to a pin (201) of a plug (200) being pulled out from the positive socket contact (11) or the negative socket contact (12) and passing a first position;
a mechanical contact switch (30) electrically connected between the positive socket contact (11) and a positive power input terminal (101) of the DC socket, and configured to be closed in response to the pin (201) being inserted into the positive socket contact (11) or the negative socket contact (12) to a second position and be opened in response to the pin (201) being pulled out from the positive socket contact (11) or the negative socket contact (12) and passing the second position, wherein a pulled-out portion of the pin (201) in the second position is longer than that of the pin (201) in the first position;
a control circuit (40) electrically connected to the linkage detection unit (20), and configured to generate a control signal lasting for a predetermined duration in response to receiving the trigger signal; and
a delayed switching-off unit (50) electrically connected between the positive socket contact (11) and the positive power input terminal (101) and electrically connected to the control circuit (40), and configured to be switched on in response to receiving the control signal from the control circuit (40) and be switched off before the pin (201) is pulled out from the positive socket contact (11) or the negative socket contact (12).

2. The DC socket of claim 1, further comprising:
a DC power supply unit (60) electrically connected to the positive power input terminal (101) and a negative power input terminal (102) of the DC socket, and electrically connected to the control circuit (40).

3. The DC socket of claim 2, wherein the DC power supply unit (60) comprises a positive terminal (VCC) and a negative terminal (GND), and the linkage detection unit (20) comprises:
a first resistor (21) electrically connected to the positive terminal (VCC) and the negative terminal (GND) of the DC power supply unit (60);
a linkage detection switch (23) electrically connected between the first resistor (21) and the negative terminal (GND), and configured to be switched off in response to the pin (201) being pulled out from the positive socket contact **(11)** or the negative socket contact (12) and passing the first position; and
a second resistor (22), an end of the second resistor (22) being electrically connected to a node between the first resistor (21) and the linkage detection switch (23), the other end of the second resistor (22) being electrically connected to the control circuit (40), and wherein when the linkage detection switch (23) is switched off, a high level voltage indicating the trigger signal is sent to the control circuit (40) via the second resistor (22).

4. The DC socket of claim 2 or 3, wherein the linkage detection unit (20) comprises a proximity switch (24).

5. The DC socket of any of claims 1-4, further comprising:
a surge current limiting unit (70) electrically connected between the delayed switching-off unit (50) and the positive power input terminal (101) of the DC socket to limit instantaneous current surges.

6. The DC socket of claim 5, wherein the surge current limiting unit (70) comprises a negative temperature coefficient thermistor.

7. The DC socket of any of claims 1-6, wherein the delayed switching-off unit (50) comprises a semiconductor switch configured to be switched on under control of the control signal.

8. The DC socket of any of claims 1-7, wherein the first position is a position where the pin (201) is pulled out by one-third of its stroke.

9. The DC socket of any of claims 1-8, further comprising:
a housing enclosing the positive socket contact (11), the negative socket contact (12), the delayed switching-off unit (50), the mechanical contact switch (30), the linkage detection unit (20), and the control circuit (40), and comprising two jacks, wherein the two jacks correspond to the positive socket contact (11) and the negative socket contact (12) respectively for insertion of pins (201) of the plug (200).

10. A power supply device comprising:
the DC socket of any of claims 1-9.
